Europäisches Patentamt

European Patent Office

Office européen des brevets

(19)

(11) Publication number: 0 398 508

A1

# EUROPEAN PATENT APPLICATION

(21) Application number: 90304270.3

(22) Date of filing: 20.04.90

(51) Int. Cl.5: **B01D 69/00, B01D 71/36, B01D 61/36**

(30) Priority: 20.04.89 JP 98833/89

(43) Date of publication of application:
**22.11.90 Bulletin 90/47**

(84) Designated Contracting States:
**DE FR GB IT SE**

(71) Applicant: JAPAN GORE-TEX, INC.
42-5, 1-chome Akazutsumi
Setagaya-ku Tokyo 156(JP)

(72) Inventor: Kikukawa, Hiroyasu,
348-7, Otami, Okayama-Shi,
Okayama-Ken 703,(JP)

(74) Representative: McCallum, William Potter et al
Cruikshank & Fairweather 19 Royal
Exchange Square
Glasgow G1 3AE Scotland(GB)

(54) A separation membrane for use in a pervaporation process and a separation method thereof.

(57) A separation membrane for use in pervaporation processes is described. The separation membrane is comprised of a porous base material that provides strength and controls swelling of a high molecular weight material permitting the high molecular weight material to be thin and thereby increasing the efficiency of the separation process.

EP 0 398 508 A1

# A SEPARATION MEMBRANE FOR USE IN A PERVAPORATION PROCESS AND A SEPARATION METHOD THEREOF

This invention relates to a separation membrane for use in a pervaporation process and the use of such a membrane in pervaporation processes. The membrane has high efficiency, stability, durability and precision when used in pervaporation processes.

In pervaporation processes it has previously been proposed to utilise separation membranes in which such a membrane comprises a primary or absorbing side in contact with a liquid and a secondary or desorbing side in contact with a gas. Membranes of high molecular weight synthetic resins have been found to possess sufficient permeability and selectivity to conform to the applicable separation conditions.

In particular, Japanese Patent Publication No. 58.92418 teaches the use of a high molecular weight membrane supported by a base material used to strengthen pervaporation membranes. The base material is located on either one or both sides of the pervaporation membrane.

However in existing material, in order to raise separation efficiency, thickness of the separation membrane must be reduced. In membrane materials exhibiting high molecular weight such as silicon rubber, it is not possible to form these materials into thin membranes with sufficient physical strength to be usable. Therefore, it is not possible to increase separation efficiency of membranes fabricated of these high molecular weight materials. Also, due to the lack of strength when membrane thickness is reduced, uniformity, separation efficiency and durability of the membranes are affected.

In Japanese Patent Publication No. 58.92418, the separation membrane thickness is reduced and the permeation rate is increased by supporting the high molecular weight membrane with a base material. In order to obtain support and strength in the separation membrane, the base material requires to have a fine microstructure. However, when the base material has a fine microstructure, the separation efficiency is decreased whenever the base material is located on the primary or absorbing side or on the secondary or desorbing side. If the base material has a coarse microstructure, the support of the base material is not sufficient for the high molecular weight membrane.

Additionally, high molecular weight membranes which have superior separation characteristics have a strong tendency to swell. This swelling results in fluctuation of the separation efficiency and decrease in the durability and the separation rate of the membrane.

According to the present invention, there is provided a separation membrane for use in pervaporation process characterised in that there is provided a porous base material produced by the stretching and fibrillation of a synthetic resin sheet, and in which a high molecular weight substance is integrated by impregnation.

According to the further aspect of the present invention, there is provided a method of separation of organic liquid mixtures characterised in that there is utilised a separation membrane comprising a porous based material produced by the stretching and fibrillation of a synthetic resin sheet and in which a high molecular weight substance is integrated by impregnation.

In the present invention, the porous base material is made of a synthetic resin, more particularly having a fibrillated porous structure and preferably produced by rolling and stretching, which is impregnated with a high molecular weight substance in a non-liquid semi-flowing state to form a separation membrane that is sufficiently thin.

The porosity of the porous base material is preferably obtained by fibrillation of a polytetrafluoroethylene sheet and is preferably between 30-95%, more preferably between 70-95%. The fibrillated porous base material has an affinity for high molecular weight materials so that the reinforcement offered by the fibrillated porous base material is obtained and swelling of the high molecular weight material is controlled.

The preferred material for the fibrillated porous base material is porous expanded polytetrafluoroethylene (PTFE) as taught in U S Patent No. 3953566. The use of expanded porous PTFE has merit since the polytetrafluoroethylene does not chemically influence the high molecular weight material. The expanded porous PTFE offers the separation membrane superior chemical and thermal resistance.

When a porous film of expanded porous PTFE is used, it is desirable that the material have a thickness between 0.1-100 $\mu$m with a porosity in the range of 30-95% more preferably 70-95% and an average pore diameter in the range of 0.02-15 $\mu$m.

When the thickness of the membrane is below 0.02 um, the porous film is excessively thin and a stable membrane is not obtained. When the thickness of the porous film exceeds 100 $\mu$m, the separation efficiency is reduced.

When the porosity of the porous film is under 30%, the amount of high molecular weight material that is able to impregnated into the porous film is reduced and the separation efficiency of the membrane decreases. When the porosity of the porous film exceeds 95%, insufficient strengthening of the high molecular weight material by the porous film results. An average pore diameter under 0.02 $\mu$m results in an insufficient amount of impregnation of the high molecular weight material into the porous film. An average pore diameter above 15 $\mu$m does not provide sufficient support for the high molecular weight material.

Other than membrane form, the base material of the present invention may be in the form of a woven or nonwoven fabric in flat, hollow or spiral forms, if the thickness of the material is under 100 $\mu$m and the porosity is between 30-95%. The base material may be a synthetic plastics material such as a polyolefin, fluorocarbon, polyester, polyimide, polysulfone, polyacrylonitrile, cellulose, polyether sulfone and silicone, or a metal or ceramic.

The high molecular weight substances that find utility in this invention include polyvinyl alcohols, silicone, modacrylics, fluorocarbons, cellulose or chitin derivatives which will resist elution from the base material under the conditions of a pervaporation process.

The porous base material may be produced by many known processes including the expansion process more fully described in U S Patent No. 3953566. The porous base material may be produced by filling the base material with a granular pore-forming agent and subsequently removing the granular pore-forming agent. Other suitable processes include electron beam irradiation and etching processes.

Embodiments of the present invention will now be described, by way of example, with reference to the following Examples.

Example 1

Liquid silicon rubber cured at room temperature (viscosity 10 poise at 25°C was impregnated into porous PTFE (thickness 5 $\mu$m; porosity 80%; pore diameter 0.5 $\mu$m) and after drying and curing, a silicon rubber-impregnated PTFE film was obtained.

Using this membrane, an aqueous solution of 6 wt. % ethanol was taken as an undiluted solution and under conditions of temperature 60°C, pressure on the primary or absorption side (ethanol aqueous solution side) at 1 atm and secondary or desorption side pressure of 3 Torr, a test based on a pervaporation process was performed. When the materials which permeated to the secondary side were collected in a cold trap and analyzed by means of gas chromatography (GC-7A, manufactured by Shimatus), ethanol concentration was 39 wt. %, the separation coefficient (ethanol/water) was 10 and speed of permeation was 1.5 kg/m².hr.

Test results after a 72 hour test interim showed values similar to those mentioned above, degradation of performance was not seen.

Comparative Example 1

The liquid silicon rubber cured at room temperature which was used in Example 1 (viscosity 10 poise at 25°C) was spread out on a fluoronated ethylene-propylene (FEP) film; after drying and curing, a film of thickness 5 $\mu$m was obtained.

When this membrane was used and pervaporation test similar to Example 1 was performed, the membrane tore after the test began, so the test could no longer be performed.

Comparative Example 2

A liquid silicon rubber cured at room temperature similar to that used in Example 1 was laminated on a porous PTFE film (thickness 40 $\mu$m; porosity 78%; pore diameter 0.2 $\mu$m). After drying and curing, a silicon rubber-laminated porous PTFE film of laminated thickness 5 $\mu$m was obtained.

When this membrane film was used and a test based on a pervaporization process similar to that in Example 1 was performed, the ethanol concentration was 34 wt. %, the separation coefficient was 8 and speed of permeation was 0.5 kg/m².hr.

Furthermore, after a test interim of 72 hours, ethanol concentration was 27 wt. %, the separation coefficient was 6 and the speed of permeation was 0.1 kg/m².hr; deterioration of performance was observed.

Example 2

Chitosan (manufactured by Nippon Rikagaku Yakuhin (K.K.)) was impregnated into a porous PTFE film (thickness 10 $\mu$m; porosity 75%; pore diameter 0.2 $\mu$m) and after curing and drying, a chitosan-impregnated film of thickness 10 $\mu$m was obtained.

The membrane was used and an aqueous solution of 86 wt. % ethanol was taken as an undiluted solution and, under conditions of temperature 60°C, pressure of the primary side (ethanol aqueous solution side) of 1 atm and pressure of the secondary side of 3 Torr, a test based on an osmotic vaporization was performed.

When the materials which permeated to the secondary side, which were collected in a cold trap, were analyzed by means of gas chromatography, the ethanol concentration was 6 wt. %, the separation coefficient (water/ethanol) was 90 and the speed of permeation was 0.4 kg/m$^2$.hr.

## Claims

1. A separation membrane for use in a pervaporation process characterised in that there is provided a porous base material produced by the stretching and fibrillation of a synthetic resin sheet, and in which a high molecular weight substance is integrated by impregnation.

2. A separation membrane as claimed in claim 1, in which the porous base material is a fibrillated porous film of polytetrafluoroethylene having a porosity of 30-95%.

3. A separation membrane as claimed in claim 1 or 2, in which porous base material is a fibrillated porous film of polytetrafluoroethylene having a porosity of 70-95%.

4. A separation membrane as claimed in any preceding claim, in which the porous base material has an average pore diameter in the range of 0.02-15 $\mu$m.

5. A separation membrane as claimed in any preceding claim, in which the porous base material has a thickness in the range of 0.1 to 100 $\mu$m.

6. A method of separation of organic liquid mixtures characterized in that there is utilised a separation membrane comprising a porous base material produced by the stretching and fibrillation of a synthetic resin sheet and in which a high molecular weight substance is integrated by impregnation.

7. A method as claimed in claim 6, in which the porous base material is a fibrillated porous film of polytetrafluoroethylene having a porosity of 30-95%.

8. A method as claimed in claim 7, in which the porous base material is a fibrillated porous film of polytetrafluoroethylene having a porosity of 70-95%.

9. A method as claimed in any of claims 6 to 8, in which the porous base material has an average pore diameter in the range of 0.02-15 $\mu$m. 10. A method as claimed in any of claims 6 to 9, in which the porous base material has a thickness in the range of 0.1 to 100 $\mu$m.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATENT ABSTRACTS OF JAPAN, vol. 7, no. 185 (C-181)[1330], 13th August 1983; & JP-A-58 89 911 (TOYO BOSEKI K.K.) 28-05-1983 | | B 01 D 69/00<br>B 01 D 71/36<br>B 01 D 61/36 |
| A | EP-A-0 039 197 (W.L. GORE & ASSOCIATES) | | |
| A | FR-A-2 425 876 (RHONE-POULENC) | | |
| A | GB-A-2 072 047 (N. STEPANOVICH) | | |
| A | EP-A-0 094 679 (ASAHI GLASS CO.) | | |
| A | WO-A-8 403 645 (W.L. GORE & ASSOCIATES) | | |

TECHNICAL FIELDS SEARCHED (Int. Cl.5)

B 01 D 61/00
B 01 D 69/00

The present search report has been drawn up for all claims

| Place of search | Date of completion of the search | Examiner |
|---|---|---|
| THE HAGUE | 24-08-1990 | DEVISME F.R. |

EPO FORM 1503 03.82 (P0401)